# EUROPÄISCHE PATENTSCHRIFT

(11) **EP 1 437 485 B1**
(45) Veröffentlichungstag und Bekanntmachung des Hinweises auf die Patenterteilung: **16.11.2005**
(21) Anmeldenummer: 03029878.0
(22) Anmeldetag: 29.12.2003
(51) Int. Cl.: F01L 9/04, G01B 7/00, G01P 15/11

(54) **Verfahren zum Herstellen eines Aktuators mit pulvermetallurgischem Positionsmessmittel, sowie Aktuator**
Method of manufacturing an actuator with powder metallurgic position measuring means, and actuator
Méthode pour produire un actionneur ayant des moyens de mesure de positionnement comprennant de la poudre métallurgique , et actionner

(30) Priorität: 08.01.2003 DE 10300504
(43) Veröffentlichungstag der Anmeldung: 14.07.2004
(73) Patentinhaber: TRW Automotive GmbH, 73553 Alfdorf (DE)
(72) Erfinder: Josef, Olaf, Dr.-Ing., 30989 Gehrden (DE); Gebauer, Klaus, Dr.-Ing., 30926 Seelze (DE); Hartwig, Christoph, Dr.-Ing., 30989 Gehrden (DE)
(74) Vertreter: Kitzhofer, Thomas

(56) Entgegenhaltungen:
- EP-A- 0 745 758
- EP-A- 0 915 319
- DE-A- 3 703 867
- US-A- 4 717 874
- US-A- 4 871 624
- US-A- 5 394 082
- US-B1- 6 427 651

## Beschreibung

Die Erfindung betrifft ein Verfahren zum Herstellen eines Aktuators, insbesondere eines Aktuators eines nockenwellenlos angetriebenen Hubventils einer Brennkraftmaschine, wobei der Aktuator einen Stößel und einen daran angebrachten Target aufweist.

Häufig sind die nockenwellenlosen Ventiltriebe elektromagnetische Aktuatoren. Damit der Stößel exakt positioniert werden kann, ist es erforderlich, seine Lage möglichst exakt zu bestimmen. Hierzu werden sogenannte Targets an Stößeln vorgesehen, deren Lage mittels entsprechend ausgelegter Sensoren bestimmt werden kann. Bislang werden hauptsächlich induktive Targets aus weichmagnetischen Werkstoffen verwendet. Dazu werden in eine Nut im Stößel die Targetteile eingelötet. Anschließend wird der Stößel üblicherweise außenseitig bearbeitet, damit der mit dem Targetmaterial ausgefüllte Bereich absatzlos in die angrenzende Außenfläche des Stößels übergeht.

Bisher eingesetzte Targets aus Vollmaterial können bei induktiven Anwendungen zu Problemen bei der Serienfertigung (Streuung über größere Stückzahl) führen. Darüber hinaus sind sie durch hohe Herstellungskosten und hohe, das Signalverhalten dämpfende Wirbelströme gekennzeichnet.

Die Erfindung schafft ein sehr kostengünstiges Verfahren zum Herstellen eines Aktuators, der sich dadurch auszeichnet, daß das Target eine geringe elektrische Leitfähigkeit, eine hohe Permeabilität, eine geringe Koerzitivfeldstärke und vor allem eine gute Frequenzstabilität der Permeabilität aufweist. Dies wird bei einem Verfahren der eingangs genannten Art dadurch erreicht, daß das Target Eisen oder eine Eisenlegierung enthält und pulvermetallurgisch hergestellt wird. Insbesondere enthält das Target Ferrit. Dieses Material ist aufgrund seiner Eigenschaften besonders geeignet für Sensoren, die auf dem induktiven Prinzip arbeiten, d.h. sie detektieren die Änderung der Impedanz und der Induktivität einer Spule. Gemäß einer anderen Ausführungsform wird annähernd reines Eisenpulver mit oxidierter Außenhaut kompaktiert.

Das Target wird gemäß der bevorzugten Ausführungsform unmittelbar auf den Stößel gesintert oder kompaktiert und dabei an ihm befestigt. Dieses Herstellungsverfahren macht es möglich, den geeigneten Werkstoff ohne Qualitätsverlust auf den Schaft zu bringen und dauerhaft an diesem zu befestigen. Die Verbindung hält auch bei sehr hohen dynamischen Belastungen.

Bevorzugt wird der Stößel mit einer Nut versehen, insbesondere einer Umfangsnut, in die der Targetwerkstoff eingebracht und in der anschließend kompaktiert oder gesintert wird. Bei dieser Ausführungsform wird also kein separates Targetteil vorab hergestellt, vielmehr wird die Nut mit dem pulverartigen Targetwerkstoff gefüllt, und anschließend wird zusammen mit dem Stößel ein Sinter- oder Kompaktierprozeß durchgeführt. Vorzugsweise sollte das Target nach dem Sintern oder Kompaktieren die Nut vollständig ausfüllen, so daß es sogar möglich ist, das Target nach dem Sintern oder Kompaktieren außenseitig unbearbeitet zu lassen. Auch der Stößel muß nach dem Sintern oder Kompaktieren nicht mehr nachbearbeitet werden, es ist vielmehr möglich, den Stößel vor dem Einbringen des Targets bereits fertig zu bearbeiten, wobei für den Stößel auch alle erforderlichen Wärmebehandlungen vorab durchgeführt sein können.

Ein späterer Aushärtprozeß für das gesinterte oder kompaktierte Material bei niedrigen Temperaturen beeinflußt weder die mechanischen noch die magnetischen Eigenschaften des Stößelmaterials, was insgesamt zu einer verbesserten Signalqualität, unter anderem aufgrund der gesteigerten Magnetqualität des Stößels führt. Dabei macht es sich auch positiv bemerkbar, daß keine die magnetischen Eigenschaften beeinflussende Lötung mehr durchgeführt werden muß.

Auch die sogenannte Serienstreuung kann auf ein Minimum reduziert werden. Komplizierte Targetformen sind jetzt ebenfalls möglich, bislang waren der Geometrie aufgrund zu komplizierter Fertigung Grenzen gesetzt. Schließlich führt das erfindungsgemäße Verfahren auch zu einem Aktuator, bei dem der Einfluß von Wirbelströmen stark reduziert wird.

Zumindest einige der oben genannten Vorteile können auch dann erreicht werden, wenn das Target ein vorgefertigtes Teil ist, welches am Stößel separat zu befestigen ist. Auch hierbei sollte eine Nut im Stößel vorhanden sein, in die das vorgefertigte Target eingesetzt wird.

Das Target ist vorzugsweise ein einstückig geschlossen umlaufender Targetring, der, wenn er in einer Umfangsnut hergestellt wird und diese ausfüllt, ohne zusätzliche Befestigungsmittel mit dem Stößel in sämtlichen Richtungen spaltfrei und spielfrei befestigt ist.

Die Erfindung betrifft darüber hinaus einen Aktuator zu Betätigung eines nockenwellenlos angetriebenen Hubventils einer Brennkraftmaschine, der insbesondere nach dem erfindungsgemäßen Verfahren hergestellt wird, mit einem oszillierend bewegten, mit dem Hubventil gekoppelten Stößel. An dem Außenumfang des Stößels ist wenigstens ein Target befestigt, das Eisen oder eine Eisenlegierung enthält und pulvermetallurgisch hergestellt wird.

Nahe des Targetrings ist gemäß der bevorzugten Ausführungsform ein auf dem Induktionsprinzip arbeitender Sensor vorgesehen, der die Lage, die Geschwindigkeit oder die Position des Targets und damit des Stößels erfassen kann.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 einen Längsschnitt durch einen in einer Brennkraftmaschine eingebauten Aktuators samt eines durch ihn betätigten, nockenwellenlos angetriebenen Hubventils einer Brennkraftmaschine,
- Figuren 2 und 3 eine vergrößerte Ansicht des Stößels im Bereich der Umfangsnut bei der Herstellung des Targets zu verschiedenen Verfahrensschritten,
- Figuren 4a bis 4c aufeinanderfolgende Verfahrensschritte bei der Herstellung eines Targets bei einer speziellen Geometrie der Umfangsnut, und
- Figuren 5a bis 5c aufeinanderfolgende Verfahrensschritte zur Herstellung und Befestigung eines separat hergestellten Targets auf dem Stößel eines erfindungsgemäßen Aktuators.

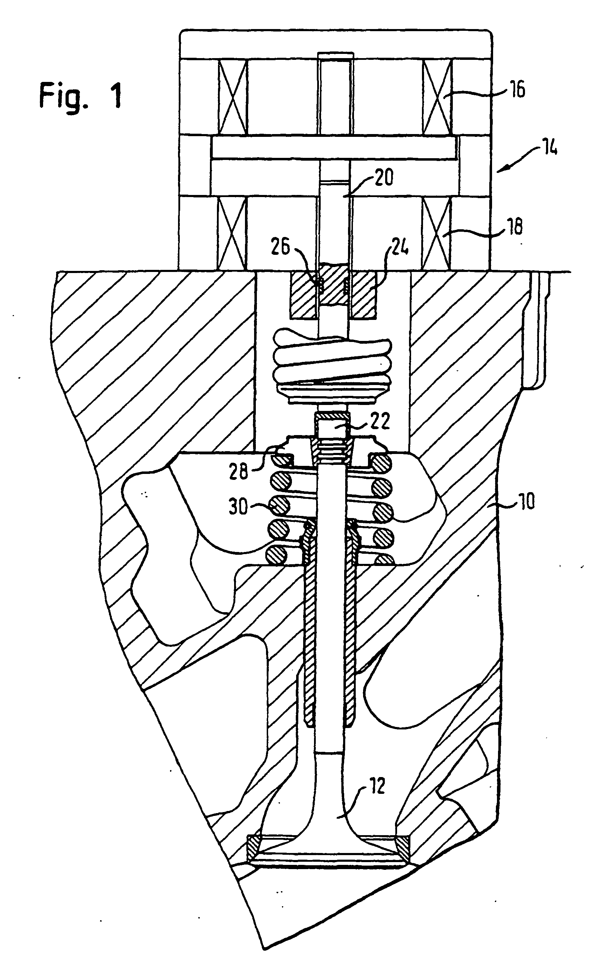

In Figur 1 ist eine Brennkraftmaschine 10 im Bereich des Zylinderkopfes dargestellt, bei der das Hubventil 12 durch einen nockenwellenlosen Ventiltrieb in Form eines elektromagnetischen Aktuators 14 betätigt wird. Der Aktuator 14 umfaßt zwei Elektromagnete 16, 18, durch die sich ein Anker oder, allgemeiner gesagt, ein Stößel 20 erstreckt, der an seinem unteren Ende zeitweilig an den Ventilschaft 22 anschlägt, so daß die axiale, oszillierende Bewegung des Stößels 20 unmittelbar eine entsprechende Bewegung des Hubventils 12 hervorruft. Die Axialbewegung des Stößels 20 soll weggesteuert erfolgen, weshalb die Lage des Stößels 20 möglichst exakt und schnell ermittelt werden muß. Ein den Stößel 20 umgebender induktiv arbeitender Sensor 24 ist für die Positionsbestimmung des Stößels 20 vorgesehen. Radial einwärts des Sensors 24 ist ein Targetring 26 in einer Umfangsnut 60 im Stößel 20 spiel- und spaltfrei aufgenommen. Der Sensor 24 bestimmt die Lage des Targetrings 26 und damit des Stößels 20 und des Hubventils 22.

Der Targetring 26 ist gemäß einer Ausführungsform aus einem Ferrit enthaltenden pulverförmigen Werkstoff gemäß einer weiteren Ausführungsform aus annähernd reinem Eisenpulver, mit einer oxidierten Außenoberfläche der Pulverteilchen. Der Targetring 26 wird pulvermetallurgisch hergestellt, wobei bei der Ausführungsform, bei der das annähernd reines Eisenpulver (Reinheitsgrad größer 95 %) verwendet wird, das Kompaktieren derart durchgeführt wird, daß die Pulverteilchen ihre oxidierte Außenoberfläche behalten. Dies sorgt, wie Versuche ergaben, für die gute Frequenzstabilität.

Der Stößel 10 ist vorzugsweise eine nicht-magnetische Stahlstange.

In Figur 1 ist noch zu erkennen, daß das Hubventil 12 durch eine an einem Federteller 28, welcher am Ventilschaft 22 befestigt ist, angreifende Druckfeder 30 in die gezeigte Schließstellung gedrückt wird.

Im folgenden wird die Herstellung des Aktuators näher beschrieben. Der Stößel 20 wird zuerst vollständig gefertigt, d.h. der gesamte Schaftschliff samt der endgültigen Wärmebehandlung des Stößels sind erfolgt. In den Stößel 20 ist eine Umfangsnut 60 eingedreht.

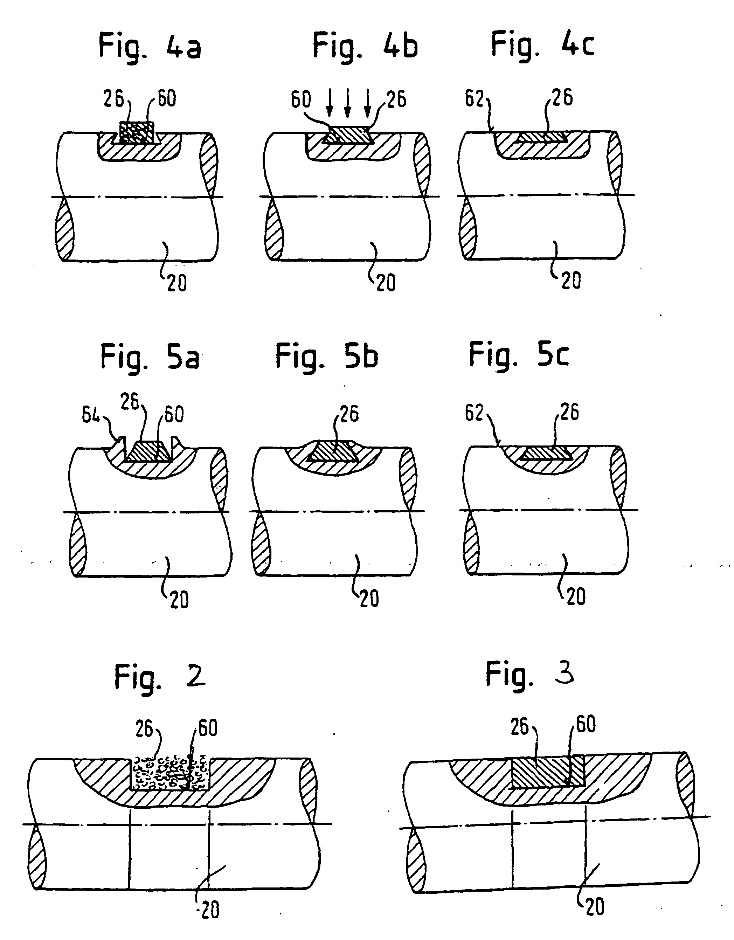

Das pulverförmige Gemisch aus Eisen oder einer Eisenlegierung, das gemäß einer Ausführungsform Ferrit enthält, wird, gemäß Figur 2, in die Umfangsnut 60 eingebracht, diese wird vollständig mit dem Material befüllt. Vorzugsweise wird außenseitig an den Stößel 20 noch eine ringförmige, sich an die Nut anschließende Zusatzkammer durch Abstandshalter geschaffen, so daß sozusagen Material angehäuft wird, das über die Nut 60 hinausgeht. Anschließend wird das Material pulvermetallurgisch bearbeitet, bevorzugt gesintert oder kompaktiert, so daß der umfangsmäßig geschlossene Targetring 26 entsteht. Dies erfolgt unter Aufbringung von Druck und/oder Temperatur (Temperatur unterhalb des Schmelzpunktes des eingebrachten Materials). Druck wird beispielsweise dadurch aufgebracht, daß zwei halbschalenförmige Klauen aufeinander zufahren und das Material in der Nut 60 verdichten und zusammendrücken. Der Stößel 20 kann dann ggf. um wenige Grad gedreht werden, um das Material gleichmäßig über dem Umfang zu verdichten. Es entsteht schließlich der in Figur 3 gezeigte Targetring, der spiel- und spaltfrei die komplette Nut 60 ausfüllt. Das Sinterverfahren wird vorzugsweise so ausgeführt, daß die Außenumfangsfläche des Stößels 20 bündig in die Umfangsfläche des Targetrings 26 übergeht.

Wird das oben erwähnte, einen Reinheitsgrad größer 95 % aufweisende Eisenpulver verwendet, erfolgt das Verfahren genauso, wobei aber beim Kompaktieren darauf geachtet wird, daß die oxidierte Außenoberfläche der Pulverteilchen erhalten bleiben.

Bei der Ausführungsform nach den Figuren 4a bis 4c werden ebenfalls verschiedene Verfahrensschritte dargestellt, wobei das Besondere hier der trapezförmige Querschnitt der Nut 60 ist. Durch die Einbringung des pulverförmigen Targetmaterials (Figur 4a) und das anschließende Aufbringen von Druck (Figur 4b) füllt sich der gesamte durch die Nut 60 gebildete Raum, sogar im hinterschnittenen Außenbereich (Figur 4c). Auch hier ist keine nachträglich Bearbeitung mehr erforderlich.

Bei der Ausführungsform nach den Figuren 5a bis 5c ist das Target kein einstückiger Ring, sondern ein Kreissegment. Mehrere Kreissegmente können den Ring bilden. Das Target 26 wird aber ebenfalls durch Sintern oder Kompaktieren eines Eisenpulvers und einem pulvermetallurgisch hergestellten Werkstoff gefertigt, wobei die Fertigung aber außerhalb der Nut 60 erfolgt. Das ein separates Teil bildende Target 26 wird danach in die Nut 60 eingesetzt. Seitlich der Nut sind an beiden Seiten radial vorstehende Ringwülste 46 am Stößel 20 ausgebildet, die entweder beim Vorfertigen, z.B. Drehen des Stößels 20 erzeugt werden oder durch anschließendes Umformen. Das Target 26 hat bei dieser Ausführungsform im Querschnitt eine trapezförmige Gestalt, wobei die längere Grundseite des Trapezes die Innenseite des Ringsegments bildet. Nach dem Einsetzen des Targets 26, vorzugsweise sämtlicher sich anschließender Segmente, wird das Material des Stößels 20 angrenzend an die Umfangsnut 60 plastisch verformt, z.B. durch Kneten, Walzen, Drücken oder andere plastische Umformverfahren. Die Ringwülste 64 wandern so axial zum Target 26, und im ungeformten Zustand ist der Target 26 spaltfrei in der Ringnut 60 aufgenommen (Figur 5b). Anschließend kann die Außenseite (62) des Stößels 20 samt Target 26 auch überschliffen werden (siehe Figur 5c). Natürlich wäre auch ein Kleben des Targets 26 in die Nut 60 möglich.

Wie sämtlichen Figuren zu entnehmen ist, ist das Material des Targets auf die Außenfläche des Stößels 20 aufgesetzt, ohne in sie einzudringen, das bedeutet, das Target ist ein vom Stößel klar abgegrenztes, separates Teil, das vorzugsweise erst in der Nut des Stößels gefertigt wird. Ein Eindiffundieren des Targetmaterials in die Außenfläche des Stößels beim Einbringen des pulverförmigen Materials erfolgt nicht.

## Patentansprüche

1. Verfahren zum Herstellen eines Aktuators, insbesondere eines Aktuators eines nockenwellenlos angetriebenen Hubventils einer Brennkraftmaschine,
wobei der Aktuator (14) einen Stößel (20) und ein daran angebrachtes Target (26) aufweist,
**dadurch gekennzeichnet, daß**
das Target (26) Eisen oder eine Eisenlegierung enthält und pulvermetallurgisch hergestellt ist.

2. Verfahren nach Anspruch 1, **dadurch gekennzeichnet, daß** der Werkstoff des Targets unmittelbar auf den Stößel (20) gesintert oder kompaktiert wird und das Target (26) bei seiner Herstellung am Stößel (20) befestigt wird.

3. Verfahren nach Anspruch 2, **dadurch gekennzeichnet, daß** der Stößel (20) eine Nut (60) hat, in die der Targetwerkstoff eingebracht und in der er anschließend gesintert oder kompaktiert wird.

4. Verfahren nach Anspruch 2 oder 3, **dadurch gekennzeichnet, daß** das Target (26) nach dem Sintern oder Kompaktieren die Nut vollständig ausfüllt.

5. Verfahren nach einem der Ansprüche 2 bis 4, **dadurch gekennzeichnet, daß** das Target (26) nach dem Sintern oder Kompaktieren außenseitig unbearbeitet bleibt.

6. Verfahren nach einem der Ansprüche 2 bis 5, **dadurch gekennzeichnet, daß** das Target (26) ein kreisförmig geschlossener Targetring ist und in einer Umfangsnut (60) des Stößels (20) durch Sintern oder Kompaktieren hergestellt ist.

7. Verfahren nach Anspruch 1, **dadurch gekennzeichnet, daß** das Target (26) ein vorgefertigtes Teil ist, das am Stößel (20) befestigt wird.

8. Verfahren nach Anspruch 7, **dadurch gekennzeichnet, daß** der Stößel (20) eine Nut (60) hat, in die das vorgefertigte Target (26) eingesetzt wird.

9. Verfahren nach einem der vorhergehenden Ansprüche, **dadurch gekennzeichnet, daß** der Stößel (20) vor dem Einbringen des Targets (26) oder des Targetmaterials bereits fertig bearbeitet ist.

10. Verfahren nach einem der vorhergehenden Ansprüche, **dadurch gekennzeichnet, daß** der Stößel (20) vor dem Einbringen des Targets (26) oder des Targetmaterials abschließend wärmebehandelt wurde.

11. Verfahren nach einem der vorhergehenden Ansprüche, **dadurch gekennzeichnet, daß** das Target (26) Ferrit enthält.

12. Verfahren nach einem der Ansprüche 1 bis 10, **dadurch gekennzeichnet, daß** das Target (26) aus einem annähernd reinen Eisenpulver durch Kompaktieren hergestellt wird, wobei die Eisenpulverteilchen vor und nach dem Kompaktieren eine oxidierte Außenoberfläche haben.

13. Aktuator, insbesondere zur Betätigung eines nockenwellenlos angetriebenen Hubventils (12) einer Brennkraftmaschine (10), hergestellt insbesondere nach dem Verfahren nach einem der vorhergehenden Ansprüche,
mit einem oszillierend bewegten, mit dem Hubventil (12) gekoppelten Stößel (20),
**dadurch gekennzeichnet, daß**
auf dem Außenumfang des Stößels (20) wenigstens ein Target (26) pulvermetallurgisch hergestellt und **dadurch** am Stößel (20) befestigt ist, wobei das Target (26) Eisen oder eine Eisenlegierung enthält.

14. Aktuator nach Anspruch 13, **dadurch gekennzeichnet, daß** nahe des Targets (26) ein auf dem Induktionsprinzip arbeitender Sensor (24) vorgesehen ist, der die Lage, die Geschwindigkeit oder die Beschleunigung des Targets (26) und damit des Stößels erfassen kann.

15. Aktuator nach Anspruch 13 oder 14, **dadurch gekennzeichnet, daß** der Target (26) ohne Befestigungsmittel am Stößel (20) angebracht ist.

16. Aktuator nach einem der Ansprüche 13 bis 15, **dadurch gekennzeichnet, daß** das Target (26) einen trapezförmigen Querschnitt hat, wobei die längere Grundseite die Innenseite des Targets (26) bildet.

17. Aktuator nach einem der Ansprüche 13 bis 16, **dadurch gekennzeichnet, daß** der Aktuator ein elektromagnetischer Aktuator ist und der Stößel den Ankerschaft bildet, wobei der Ankerschaft den Ventilschaft (22) antreibt.

18. Aktuator nach einem der Ansprüche 13 bis 17, **dadurch gekennzeichnet, daß** das Target (26) unmittelbar auf den Stößel gesintert oder kompaktiert ist.

19. Aktuator nach einem der Ansprüche 13 bis 18, **dadurch gekennzeichnet, daß** das Target (26) in einer Umfangsnut (60) am Stößel (20) aufgenommen ist.

## Claims

1. A method of producing an actuator, in particular an actuator of a non-camshaft driven lift valve of an internal combustion engine,
the actuator (14) having a tappet (20) and a target (26) mounted thereto,
**characterized in that**
the target (26) contains iron or an iron alloy and is produced by powder metallurgy.

2. The method according to Claim 1, **characterized in that** the material of the target is sintered or compacted directly onto the tappet (20) and the target (26) is fastened during its manufacture to the tappet (20).

3. The method according to Claim 2, **characterized in that** the tappet (20) has a groove (60), into which the target material is introduced and in which it is subsequently sintered or compacted.

4. The method according to Claim 2 or 3, **characterized in that** the target (26) fills the groove completely after the sintering or compacting.

5. The method according to any of Claims 2 to 4, **characterized in that** the target (26) remains unprocessed externally after the sintering or compacting.

6. The method according to any of Claims 2 to 5, **characterized in that** the target (26) is a target ring closed in a circular shape and is produced in a peripheral groove (60) of the tappet (20) by sintering or compacting.

7. The method according to Claim 1, **characterized in that** the target (26) is a prefabricated part which is fastened to the tappet (20).

8. The method according to Claim 7, **characterized in that** the tappet (20) has a groove (60) into which the prefabricated target (26) is inserted.

9. The method according to any of the preceding claims, **characterized in that** the tappet (20) is already finished before the target (26) or the target material is introduced.

10. The method according to any of the preceding claims, **characterized in that** the tappet (20) is given a final thermal treatment before the target (26) or the target material is introduced.

11. The method according to any of the preceding claims, **characterized in that** the target (26) contains ferrite.

12. The method according to any of Claims 1 to 10, **characterized in that** the target (26) is produced from an approximately pure iron powder by compacting, the iron powder particles having an oxidized outer surface before and after the compacting.

13. An actuator, in particular for actuating a non-camshaft driven lift valve (12) of an internal combustion engine (10), produced in particular in accordance with the method according to any of the preceding claims,
comprising a tappet (20), moved in an oscillating manner, coupled to the lift valve (12),
**characterized in that**
on the outer periphery of the tappet (20) at least one target (26) is produced by powder metallurgy and is thereby fastened to the tappet (20), the target (26) containing iron or an iron alloy.

14. The actuator according to Claim 13, **characterized in that** close to the target (26), a sensor (24) is provided, operating according to the induction principle, which can detect the position, the speed or the acceleration of the target (26) and hence of the tappet.

15. The actuator according to Claim 13 or 14, **characterized in that** the target (26) is mounted to the tappet (20) without fastening means.

16. The actuator according to any of Claims 13 to 15, **characterized in that** the target (26) has a trapezoidal cross-section, the longer base side forming the inner side of the target (26).

17. The actuator according to any of Claims 13 to 16, **characterized in that** the actuator is an electromagnetic actuator and the tappet forms the armature shaft, the armature shaft driving the valve shaft (22).

18. The actuator according to any of Claims 13 to 17, **characterized in that** the target (26) is sintered or compacted directly onto the tappet.

19. The actuator according to any of Claims 13 to 18, **characterized in that** the target (26) is accommodated in a peripheral groove (60) on the tappet (20).

## Revendications

1. Procédé de fabrication d'un actionneur, notamment d'un actionneur d'une soupape de levée à entraînement sans arbre à cames, pour un moteur à combustion interne,
dans lequel l'actionneur (14) présente un poussoir (20) et une cible (26), appliquée sur celui-ci,
**caractérisé en ce que**
la cible (26) contient du fer ou un alliage de fer et est fabriquée par métallurgie des poudres.

2. Procédé selon la revendication 1, **caractérisé en ce que** le matériau de la cible est fritté ou compressé directement sur le poussoir (20), et la cible (26) est fixée, lors de sa fabrication, contre le poussoir (20).

3. Procédé selon la revendication 2, **caractérisé en ce que** le poussoir (20) présente une rainure (60), dans laquelle le matériau de la cible est mis en place et y est ensuite fritté ou compressé.

4. Procédé selon la revendication 2 ou 3, **caractérisé en ce que** la cible (26) remplit complètement la rainure, après le frittage ou la compression.

5. Procédé selon l'une des revendications 2 à 4, 2 **caractérisé en ce que** la cible (26) reste à l'état non ouvré sur son côté extérieur, après le frittage ou la compression.

6. Procédé selon l'une des revendications 2 à 5, **caractérisé en ce que** la cible (26) est un anneau cible fermé et circulaire, et elle est fabriquée par frittage ou par compression dans une rainure périphérique (60) du poussoir (20).

7. Procédé selon la revendication 1, **caractérisé en ce que** la cible (26) est un élément préfabriqué qui est fixé contre le poussoir (20).

8. Procédé selon la revendication 7, **caractérisé en ce que** le poussoir (20) présente une rainure (60), dans laquelle la cible (26) préfabriquée est logée.

9. Procédé selon l'une des revendications précédentes, **caractérisé en ce que** le poussoir (20) est déjà complètement façonné avant l'introduction de la cible (26) ou du matériau de la cible.

10. Procédé selon l'une des revendications précédentes, **caractérisé en ce que** le poussoir (20) a été soumis à un traitement thermique de finition, avant l'introduction de la cible (26) ou du matériau formant cible.

11. Procédé selon l'une des revendications précédentes, **caractérisé en ce que** la cible (26) contient de la ferrite.

12. Procédé selon l'une des revendications 1 à 10, **caractérisé en ce que** la cible (26) est fabriquée par compression à partir d'une poudre de fer à peu près pure, les particules de poudre de fer ayant une surface extérieure oxydée avant et après la compression.

13. Actionneur, notamment pour la commande d'une soupape de levée (12) à entraînement sans arbre à cames, d'un moteur à combustion interne (10), fabriqué notamment selon le procédé selon l'une des revendications précédentes, comportant un poussoir (20) accouplé à la soupape de levée (12) et animé d'un mouvement oscillant,
**caractérisé en ce que**
au moins une cible (26) est fabriquée par métallurgie des poudres sur la périphérie extérieure du poussoir (20) et est ainsi fixée contre le poussoir (20), la cible (26) contenant du fer ou un alliage de fer.

14. Actionneur selon la revendication 13, **caractérisé en ce qu'**il est prévu, à proximité de la cible (26), un capteur (20) fonctionnant sur le principe de l'induction, et qui peut détecter la position, la vitesse ou l'accélération de la cible (26) et, par conséquent, du poussoir.

15. Actionneur selon la revendication 13 ou 14, **caractérisé en ce que** la cible (26) est appliquée contre le poussoir (20) sans moyens de fixation.

16. Actionneur selon l'une des revendications 13 à 15, **caractérisé en ce que** la cible (26) présente une section transversale trapézoïdale, dans laquelle la grande base constitue le côté intérieur de la cible (26.).

17. Actionneur selon l'une des revendications 13 à 16, **caractérisé en ce que** l'actionneur est un actionneur électromagnétique, et le poussoir constitue la tige d'induit, la tige d'induit entraînant la tige de soupape (22).

18. Actionneur selon l'une des revendications 13 à 17, **caractérisé en ce que** la cible (26) est directement frittée ou compressée sur le poussoir.

19. Actionneur selon l'une des revendications 13 à 30 18, **caractérisé en ce que** la cible (26) est logée dans une rainure périphérique (60) ménagée dans le poussoir (20).
